# EUROPEAN PATENT APPLICATION

(11) **EP 4 333 183 A1**
(43) Date of publication of application: **06.03.2024**
(21) Application number: 22825383.7
(22) Date of filing: 17.06.2022
(51) Int. Cl.: H01M 50/358, H01M 50/211, H01M 50/24, A62C 99/00, H01M 50/249

(54) **BATTERY MODULE HAVING IMPROVED VENTING PERFORMANCE**

(30) Priority: 17.06.2021 KR 20210078996
(71) Applicant: LG Energy Solution, Ltd., Seoul 07335 (KR)
(72) Inventor: LEE, Jung-Hoon, Daejeon 34122 (KR); SEONG, Jun-Yeob, Daejeon 34122 (KR); JUNG, Hye-Mi, Daejeon 34122 (KR)
(74) Representative: Goddar, Heinz J.
(86) International application number: PCT/KR2022/008653
(87) International publication number: WO 2022/265460

(57) **Abstract**

Disclosed is a battery module with improved safety by suitably controlling venting of a gas generated inside the battery module. The battery module includes a cell assembly having at least one battery cell; a module case configured to accommodate the cell assembly in an inner space thereof and having a venting hole formed to discharge a venting gas generated from the cell assembly; and a venting unit provided to an outer side of the module case and configured to have a venting channel formed in at least one layer so that the venting gas discharged from the venting hole is introduced into the venting channel and is movable in the inner space.

## Description

### TECHNICAL FIELD

The present application claims priority to Korean Patent Application No. 10-2021-0078996 filed on June 17, 2021, in the Republic of Korea, the disclosures of which are incorporated herein by reference.

The present disclosure relates to a battery, and more particularly, to a battery module with improved safety by improved venting performance when a gas is generated inside the battery module, and a battery pack and a vehicle including the same.

### BACKGROUND ART

As the demand for portable electronic products such as laptops, video cameras and mobile phones has rapidly increased and robots, electric vehicles and the like are being commercialized in earnest, research on high-performance secondary batteries allowing repeatedly charging and discharging has been actively researched.

Currently commercialized secondary batteries include nickel cadmium battery, nickel hydrogen battery, nickel zinc battery, lithium secondary battery, and so on, among which the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses lithium-based oxides and carbon materials as a positive electrode active material and a negative electrode active material, respectively. The lithium secondary battery includes an electrode assembly with in which a positive electrode plate and a negative electrode plate respectively coated with the positive electrode active material and the negative electrode active material are disposed with a separator interposed therebetween, and an exterior, namely a battery case, for sealing the electrode assembly together with an electrolyte.

In general, the lithium secondary battery may be classified depending on the shape of the exterior into a can-type secondary battery in which the electrode assembly is included in a metal can and a pouch-type secondary battery in which the electrode assembly is included in a pouch of an aluminum laminate sheet.

Recently, secondary batteries have been widely used for driving or energy storage not only in small devices such as portable electronic devices, but also in medium and large devices such as electric vehicles and energy storage systems (ESS). A plurality of secondary batteries may be accommodated together in a module case in a state of being electrically connected to constitute one battery module. In this case, a plurality of battery cells (secondary batteries) may be provided in a dense state in a narrow space to increase energy density inside the battery module.

However, when the plurality of battery cells (secondary batteries) are concentrated in a narrow space, they may be vulnerable to accidents such as fire or explosion. For example, when an event such as thermal runaway occurs in any one battery cell, a high-temperature venting gas may be discharged from the battery cell. If the venting gas is not properly discharged to the outside of the battery module, it may propagate to other battery cells provided inside the battery module to cause a chain reaction. Also, in this case, the pressure inside the battery module increases, and there is a possibility of an explosion. When the battery module explodes, the explosion pressure may cause great damage to nearby devices or users and may also increase the damage range and speed. Therefore, when a venting gas is generated inside the battery module, it is good to properly discharge the venting gas to the outside.

However, the venting gas discharged from the battery module is often at a high temperature, and the venting gas often contains substances that may serve as an ignition source, such as sparks. If the venting gas is not properly controlled and discharged as it is, another problem may occur. For example, a high-temperature venting gas may cause burns and other damage to battery users, such as the vehicle driver or occupants, or to nearby people. In particular, since the venting gas may be discharged very quickly, it may not be possible to secure sufficient time for the user to evacuate. Also, when a high-temperature spark is emitted from the venting gas, it may combine with oxygen outside the battery module to cause a fire. Moreover, a fire outside the battery module may lead to not only a fire of the battery module but also a device equipped with the battery module, for example a vehicle, which may result in great loss of life and property.

### DISCLOSURE

### Technical Problem

The present disclosure is designed to solve the problems of the related art, and therefore the present disclosure is directed to providing a battery module configured to improve safety by suitably controlling venting of a gas generated inside the battery module, and a battery pack and a vehicle including the same.

However, the technical problems to be solved by the present disclosure are not limited to the above, and other problems not mentioned herein will be clearly understood by those skilled in the art from the following disclosure.

### Technical Solution

In one aspect of the present disclosure, there is provided a battery module, comprising: a cell assembly having at least one battery cell; a module case configured to accommodate the cell assembly in an inner space thereof and having a venting hole formed to discharge a venting gas generated from the cell assembly; and a venting unit provided to an outer side of the module case and configured to have a venting channel formed in at least one layer so that the venting gas discharged from the venting hole is introduced into the venting channel and is movable in the inner space.

Here, the venting unit may have an inlet formed in an inner surface thereof to communicate with the venting hole of the module case and have an outlet formed in a portion other than the inner surface.

In addition, the venting unit may be formed in a multilayer structure.

In addition, the battery module may further comprise a fire extinguishing member configured to generate carbon dioxide through a pyrolysis reaction.

In addition, the fire extinguishing member may be configured to generate water together with the carbon dioxide through the pyrolysis reaction.

In addition, the fire extinguishing member may be located inside the module case.

In addition, the fire extinguishing member may be located inside the venting unit.

In addition, the fire extinguishing member may be located on an upper surface of the venting channel.

In addition, the venting unit may have an inclined surface formed on the venting channel.

In another aspect of the present disclosure, there is also provided a battery pack, comprising the battery module according to the present disclosure.

In another aspect of the present disclosure, there is also provided a vehicle, comprising the battery module according to the present disclosure.

### Advantageous Effects

According to the present disclosure, when a gas is generated inside the battery module, venting may be appropriately controlled.

In particular, according to an embodiment of the present disclosure, it is possible to effectively control gas venting of the battery module without significantly changing the internal configuration of the battery module.

In addition, according to an embodiment of the present disclosure, it is possible to effectively suppress the occurrence of a fire caused by the gas generated in the battery module, or to quickly extinguish the fire even if it occurs.

In addition, according to an embodiment of the present disclosure, it is possible to delay the rate of fire spread.

Moreover, according to an embodiment of the present disclosure, it is possible to lower the temperature of the high-temperature venting gas or a material discharged therewith.

In addition, according to an embodiment of the present disclosure, it is possible to block or suppress the inflow of oxygen into the battery module.

Therefore, in the present disclosure, a battery module with improved safety and an application device thereof may be provided. In particular, when the battery module according to the present disclosure is applied to a vehicle, the safety of occupants may be more effectively guaranteed.

In addition, the present disclosure may have various other effects, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view schematically showing a configuration of a battery module according to an embodiment of the present disclosure.
FIG. 2 is a perspective view showing the configuration of FIG. 1 in an assembled state.
FIG. 3 is a perspective view showing the configuration of a venting unit of FIG. 1, as viewed from the bottom.
FIG. 4 is a diagram schematically showing a cross-sectional configuration taken along line A1-A1' of FIG. 2.
FIG. 5 is a cross-sectional view schematically showing the configuration of a battery module according to another embodiment of the present disclosure.
FIG. 6 is a cross-sectional view schematically showing the configuration of a battery module according to still another embodiment of the present disclosure.
FIG. 7 is a cross-sectional view schematically showing the configuration of a battery module according to still another embodiment of the present disclosure.
FIG. 8 is a cross-sectional view schematically showing the configuration of a battery module according to still another embodiment of the present disclosure.
FIG. 9 is a cross-sectional view schematically showing the configuration of a battery module according to still another embodiment of the present disclosure.
FIGS. 10 and 11 are cross-sectional views schematically showing the configuration of battery modules according to still other embodiments of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

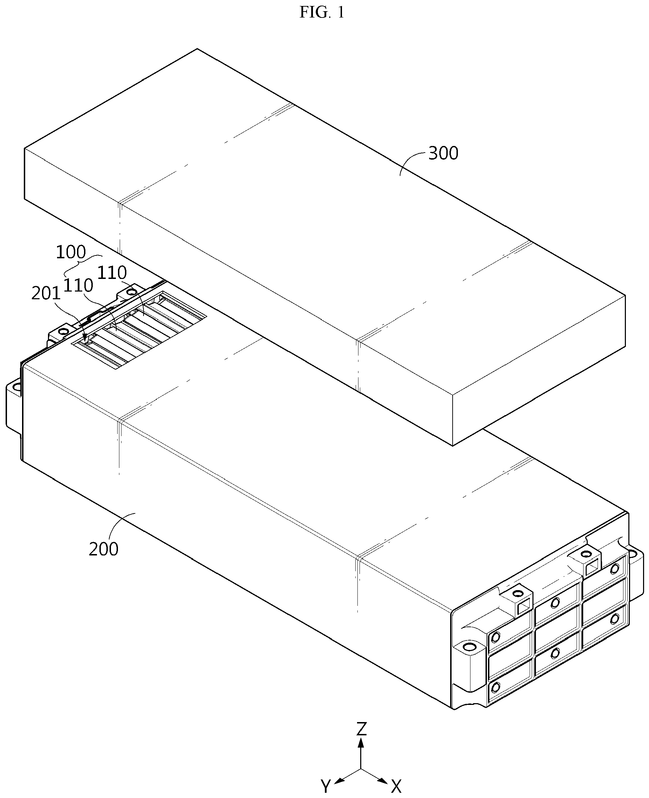

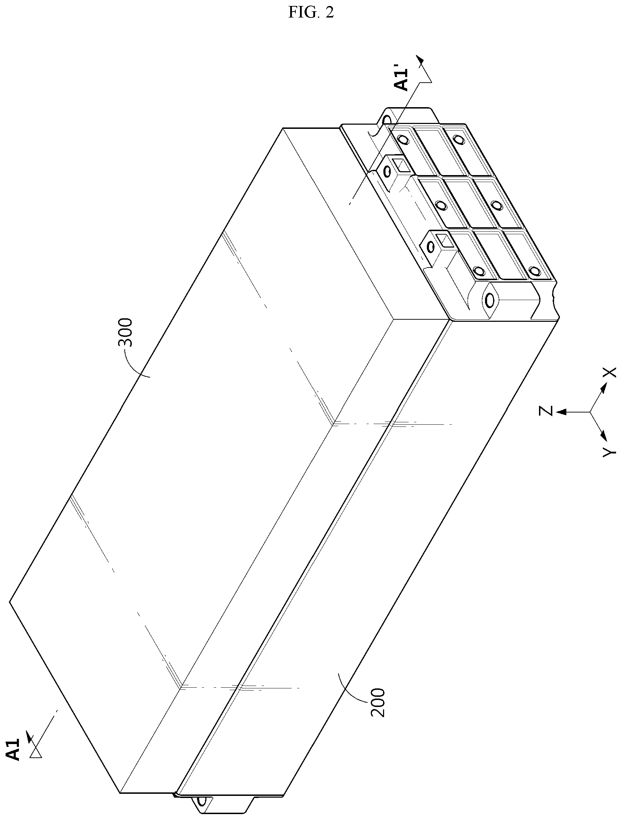

FIG. 1 is an exploded perspective view schematically showing a configuration of a battery module according to an embodiment of the present disclosure, and FIG. 2 is a perspective view showing the configuration of FIG. 1 in an assembled state.

Referring to FIGS. 1 and 2, the battery module according to the present disclosure includes a cell assembly 100, a module case 200, and a venting unit 300.

The cell assembly 100 may include at least one battery cell 110. Here, each battery cell 110 may mean a secondary battery. The secondary battery may include an electrode assembly, an electrolyte, and a battery case. In particular, the battery cell 110 provided in the cell assembly 100 may be a pouch-type secondary battery. However, other types of secondary batteries, such as a cylindrical battery or a prismatic battery, may also be employed in the cell assembly 100 of the present disclosure.

The plurality of secondary batteries 110 may form the cell assembly 100 in a stacked form. For example, as shown in the drawing, the plurality of secondary batteries 110 may be stacked in a horizontal direction (y-axis direction in the drawing) in a state of standing up an upper and lower direction (z-axis direction in the drawing). Each battery cell 110 may include electrode leads, and the electrode leads may be located at both ends or at one end of each battery cell 110. A secondary battery in which the electrode leads protrude in both directions is called a bidirectional cell, and a secondary battery in which the electrode leads protrude in one direction is a unidirectional cell. The present disclosure is not limited by the specific type or shape of the secondary battery, and various types of secondary batteries known at the time of filing of this application may be employed in the cell assembly 100 of the present disclosure.

The module case 200 may be configured to have an empty space formed therein and accommodate the cell assembly 100 in the inner space. Moreover, as shown in FIG. 1, the module case 200 may have a venting hole 201. The venting hole 201 may be configured such that, when a venting gas is generated from the cell assembly 100 accommodated in the inner space, the generated venting gas may be discharged to the outer space of the module case 200. In FIG. 1, the venting hole 201 is illustrated as being elongated in one direction, but the present disclosure is not necessarily limited to this shape of the venting hole 201. In addition, although the venting hole 201 is shown in a completely open form in FIG. 1, the venting hole 201 may not be fully opened, and may be configured to be closed in a normal state and be opened according to change in pressure or temperature. That is, the venting hole 201 may be configured in various forms other than the configuration shown in FIG. 1.

The venting unit 300 may be provided on at least one side of the module case 200 so that the venting gas is movable. In particular, the venting unit 300 may be provided at the outer side of the module case 200. Moreover, the venting unit 300 may be configured to be attached to at least a portion of the module case 200 where the venting hole 201 is formed.

In addition, the venting unit 300 may be configured to have a venting channel formed in one or more layers. That is, the venting unit 300 may be configured such that the venting gas discharged from the venting hole 201 is introduced into the inner space and is movable in the inner space.

According to this configuration of the present disclosure, by controlling the path of the venting gas discharged from the module case 200 of the battery module, it is possible to remove or reduce damage to the user or other devices by the high-temperature venting gas. In addition, according to this configuration of the present disclosure, by attaching the venting unit 300 to the outer side of the battery module without significantly changing the general configuration of the battery module, for example the structure of the module case 200 or the cell assembly 100 provided therein, it is possible to control the venting gas in various ways. In addition, according to this configuration of the present disclosure, the venting unit 300 may provide a space to prepare an effective structure or component to control gas or fire.

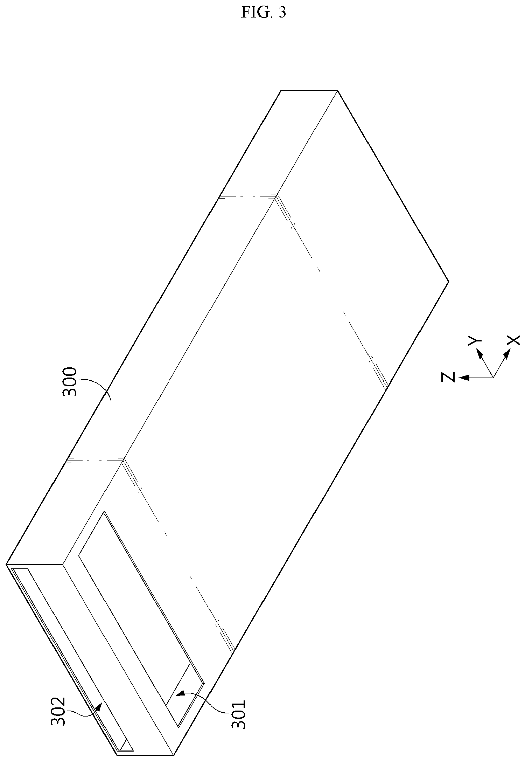

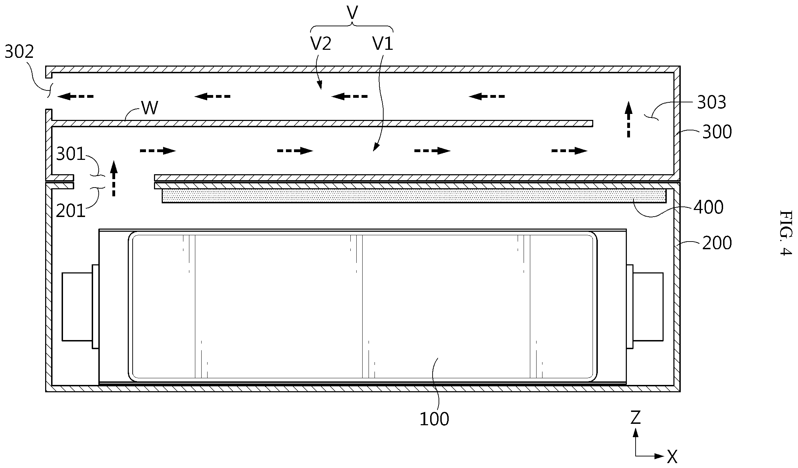

The venting unit 300 may be configured such that the venting gas discharged from the venting hole 201 of the module case 200 is introduced into the inside, flows in the venting channel, and then is discharged to the outside. A more specific configuration of the venting unit 300 will be described in more detail with reference to FIGS. 3 and 4.

FIG. 3 is a perspective view showing the configuration of the venting unit 300 of FIG. 1, as viewed from the bottom, and FIG. 4 is a diagram schematically showing a cross-sectional configuration taken along line A1-A1' of FIG. 2.

Referring to FIGS. 3 and 4 further, the venting unit 300 may have an inlet 301 and an outlet 302. Here, the inlet 301 may be formed at the inner surface, and the inner surface may be a surface of the venting unit 300 toward the module case 200, namely a surface facing the module case 200. For example, in the embodiment of FIGS. 1 to 4, the venting unit 300 may be configured such that the lower surface thereof is attached to the module case 200, and at this time, the inlet 301 may be formed at the lower surface of the venting unit 300. In particular, the inlet 301 of the venting unit 300 may be configured to communicate with the venting hole 201 of the module case 200. That is, as shown in FIG. 4, the inlet 301 at the lower surface of the venting unit 300 may be formed at a position corresponding to the portion where the venting hole 201 is formed on the upper surface of the module case 200. Accordingly, the venting hole 201 and the inlet 301 communicate with each other, and the venting gas discharged from the venting hole 201 may be introduced into the venting unit 300 through the inlet 301.

In addition, the venting unit 300 may be configured such that the outlet 302 is formed in a portion where the inlet 301 is not formed. For example, when the inlet 301 is formed at the lower surface of the venting unit 300, the outlet 302 may be formed at a surface of the venting unit 300 other than the lower surface. In particular, as shown in FIGS. 3 and 4, the outlet 302 may be formed at the side surface of the venting unit 300.

According to this embodiment of the present disclosure, when the venting gas flowing inside the venting unit 300 is discharged from the venting unit 300, it is possible to prevent the venting gas from being discharged toward the cell assembly 100. Therefore, it is possible to prevent the temperature of the cell assembly 100 from increasing due to the venting gas. In addition, according to this embodiment of the present disclosure, by positioning the inlet 301 and the outlet 302 at different portions inside the venting unit 300, it is possible to easily configure the venting channel V to be elongated inside the venting unit 300. Therefore, in this case, it is possible to lower the temperature of the venting gas while the venting gas is passing through the venting channel V.

Moreover, in this embodiment, as shown in FIGS. 3 and 4, when the inlet 301 is located at a lower portion, the outlet 302 may be configured so that the venting unit 300 is located at a side surface rather than the upper surface. When the battery module is mounted on a vehicle, the battery module is often disposed in a lower portion of the vehicle, so an occupant may be positioned above the battery module. Therefore, when the outlet 302 is located on the side surface of the venting unit 300 as in this embodiment, it is possible to prevent the high-temperature venting gas from being discharged toward the occupant. In addition, according to this embodiment, only by positioning the inlet 301 and the outlet 302, it is possible to more easily achieve the configuration in which the flow direction of the venting gas inside the venting unit 300 is bent at least once.

Meanwhile, unless otherwise specified in this specification, the inner direction may mean a direction toward the center of the battery module, and the outer direction may mean the opposite direction.

The venting unit 300 may be formed in a multilayer structure. That is, the venting unit 300 may be configured so that the venting channel V has two or more layers. For example, as shown in FIG. 4, the venting unit 300 may have a two-layer structure. In this case, it may be regarded that the venting unit 300 includes an inner layer channel V1 positioned at a relatively inner side and an outer layer channel V2 positioned at a relatively outer side. Moreover, when the venting unit 300 is located in the upper portion of the module case 200 as shown in the drawings, the inner layer channel V1 may be located below the outer layer channel V2. In addition, a barrier may be provided in the inner space of the venting unit 300, as indicated by W in FIG. 4, in order to distinguish the venting channels V (the inner layer channel V1, the outer layer channel V2) of different layers. In this case, a connection hole 303 may be formed in at least one side of the barrier W. The venting channels V (the inner layer channel V1, the outer layer channel V2) of different layers may communicate with each other through the connection hole 303. In this case, the venting gas introduced into any one venting channel V may flow to the other venting channel V through the connection hole 303.

In this configuration, the inlet 301 and the outlet 302 may be configured to be formed in different venting channels V. For example, referring to FIG. 4, the inlet 301 may be formed in the inner layer channel V1, and the outlet 302 may be formed in the outer layer channel V2. More specifically, the inlet 301 may be formed in the lower portion of the inner layer channel V1, and the outlet 302 may be formed in the side portion of the outer layer channel V2.

According to this configuration of the present disclosure, when the venting gas is discharged from the cell assembly 100 inside the module case 200, the discharged venting gas may flow as indicated by an arrow in the drawing. That is, the venting gas may be introduced into the inner layer channel V1 of the venting unit 300 from the cell assembly 100 through the venting hole 201 and the inlet 301 in the inner space of the module case 200. In addition, the venting gas may flow along the inner layer channel V1 of the venting unit 300 and be introduced into the outer layer channel V2 of the venting unit 300 through the connection hole 303. In addition, the venting gas may flow along the outer layer channel V2 of the venting unit 300 and be discharged to the outside of the venting unit 300 through the outlet 302 of the outer layer channel V2.

According to this configuration of the present disclosure, it is possible to significantly extend the flow path of the venting gas through the plurality of venting channels V provided in the venting unit 300. Therefore, it is possible to obtain the effect of lowering the temperature of the venting gas while the venting gas is flowing along the venting channel V. Moreover, the venting unit 300 may be configured such that the flow direction of the venting gas therein is bent at least once. In particular, as in this embodiment, the venting unit 300 may be configured so that the flow directions of the venting gases flowing through different venting channels V are opposite to each other. For example, in the embodiment of FIG. 4, the venting unit 300 may be configured such that the venting gas flows in the right direction (+x-axis direction in the drawing) in the inner layer channel V1 and the venting gas flows in the left direction (-x-axis direction in the drawing) in the outer layer channel V2. According to this embodiment, when the venting gas includes a spark in the form of particles, the spark may be suppressed from being discharged to the outside from the inside of the venting unit 300 due to the straightness of the spark. Therefore, it is possible to more effectively prevent a fire from occurring due to the spark.

The battery module according to an embodiment of the present disclosure may further include a fire extinguishing member 400, as shown in FIG. 4.

The fire extinguishing member 400 may be configured to generate carbon dioxide through a pyrolysis reaction. In particular, the fire extinguishing member 400 may include a predetermined substance that decomposes into two or more different substances when heat of a certain level or above is applied, namely a fire extinguishing material. In this case, the fire extinguishing material included in the fire extinguishing member 400 may be a material from which at least carbon dioxide is generated due to pyrolysis. In particular, the fire extinguishing member 400 may be configured to generate carbon dioxide by causing a pyrolysis reaction by the venting gas or spark when the venting gas is discharged from the cell assembly 100 or the spark is ejected.

According to this configuration of the present disclosure, when a venting gas or spark is ejected from a predetermined battery cell 110 of the cell assembly 100, carbon dioxide is generated, and thus it is possible to suppress the occurrence of fire or prevent the spread of fire. In particular, in this case, by supplying carbon dioxide, the inflow of oxygen may be prevented or reduced. In addition, according to this embodiment, since heat is absorbed during the pyrolysis reaction process of the fire extinguishing member 400, it is possible to lower the temperature of the venting gas or spark. Moreover, according to this embodiment, there is no need to supply a separate control or drive power to generate carbon dioxide and absorb heat.

Moreover, the fire extinguishing member 400 may be configured to generate water with carbon dioxide through the pyrolysis reaction. That is, the fire extinguishing member 400 may be configured to include a fire extinguishing material for discharging carbon dioxide and water by causing a pyrolysis reaction due to the heat supplied by gas or spark when high-temperature venting gas or spark is discharged from the cell assembly 100.

For example, the fire extinguishing member 400 may include potassium hydrogen carbonate or sodium hydrogen carbonate as the fire extinguishing material.

Representatively, in the case of potassium hydrogen carbonate, carbon dioxide and water (water vapor) may be generated through the following pyrolysis reaction.

2KHCO₃ → K₂CO₃ + H₂O + CO₂ - Q

That is, when potassium hydrogen carbonate is included in the fire extinguishing member 400, potassium hydrogen carbonate may absorb heat (Q) and generate water vapor (H₂O) and carbon dioxide (CO₂) together with K₂CO₃.

According to this embodiment of the present disclosure, when high-temperature venting gas or spark is discharged from the cell assembly 100, water (water vapor) and carbon dioxide may be discharged due to the fire extinguishing material provided in the fire extinguishing member 400. Therefore, it is possible to quickly extinguish the spark or fire inside the battery module while blocking the inflow of oxygen into the battery module. In addition, by lowering the temperature of at least some components of the battery module, for example the venting unit 300, the module case 200 and the cell assembly 100, or the temperature of the venting gas, it is possible to more effectively prevent the thermal runaway or the spread of fire.

The fire extinguishing member 400 may be made of only a fire extinguishing material, or may further include other materials in addition to the fire extinguishing material.

For example, the fire extinguishing member 400 may be made of only potassium hydrogen carbonate or sodium hydrogen carbonate. As another example, the fire extinguishing member 400 may further include a support portion for supporting or holding the fire extinguishing material in a specific position in addition to the fire extinguishing material such as potassium hydrogen carbonate or sodium hydrogen carbonate. For example, the fire extinguishing member 400 may include a support portion in the form of a mesh. As a more specific example, the fire extinguishing member 400 may be configured such that the fire extinguishing material is supported upward by the support portion in the form of a mesh.

The fire extinguishing member 400 may be configured to be located inside the module case 200, as shown in FIG. 4. In particular, the fire extinguishing member 400 may be provided to be attached to the inner surface of the upper portion of the module case 200. At this time, the fire extinguishing member 400 may be configured in a plate shape. For example, the fire extinguishing member 400 may be formed in a rectangular plate shape in which potassium hydrogen carbonate powder is compressed.

According to this embodiment of the present disclosure, it is possible to minimize the space occupied by the fire extinguishing member 400 in the inner space of the module case 200. Therefore, even if the fire extinguishing member 400 is located inside the module case 200, it is possible to prevent the energy density of the battery module from being lowered. In particular, as shown in the drawing, the cell assembly 100 may be configured such that a plurality of pouch-type batteries are arranged therein to be erect upright in a horizontal direction. At this time, when the plate-shaped fire extinguishing member 400 is attached to the inner surface of the upper portion of the module case 200, even if gas or spark is ejected from any pouch-type battery, the fire extinguishing member 400 absorbs heat and supplies carbon dioxide and water vapor, thereby quickly and reliably achieving the effect of suppressing fire. In addition, according to this embodiment, by maximizing the contact area for the plate-shaped fire extinguishing member 400, the pyrolysis reaction for the fire extinguishing member 400 may occur securely.

In this embodiment, the fire extinguishing member 400 may be located on the inner upper surface of the module case 200 and may be provided in a portion where the venting hole 201 is not located. In this case, the gas generated from the cell assembly 100 may be more rapidly discharged toward the venting hole 201. In particular, since carbon dioxide and water may be generated by the fire extinguishing member 400 in a portion where the venting hole 201 is not formed, the venting gas of the cell assembly 100 may more smoothly move toward the venting hole 201. In addition, according to this embodiment, by the fire extinguishing member 400, it is possible to prevent the module case 200 from being damaged by the high-temperature gas or spark ejected upward from the cell assembly 100. In particular, the module case 200 may be made of a material such as plastic, and in this case, the fire extinguishing member 400 may prevent the module case 200 from being melted or damaged by the high-temperature venting gas or spark.

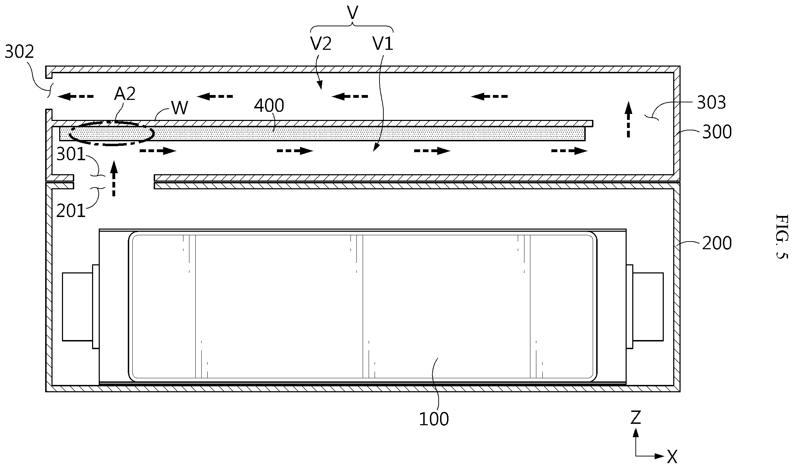

In addition, the fire extinguishing member 400 may be configured to be located inside the venting unit 300. This will be described in more detail with reference to FIG. 5.

FIG. 5 is a cross-sectional view schematically showing the configuration of a battery module according to another embodiment of the present disclosure. In particular, FIG. 5 may be regarded as a modification to the embodiment of FIG. 4. Also for this embodiment, features different from the former embodiments will be described in detail, and features identical or similar to the former embodiment will not be described in detail.

Referring to FIG. 5, the fire extinguishing member 400 may be provided in the inner space of the venting unit 300, particularly in the venting channel V. Moreover, the venting unit 300 may include a plurality of venting channels V, and the fire extinguishing member 400 may be located in at least some of the plurality of venting channels V. For example, as shown in FIG. 5, when the venting unit 300 includes two layers, namely an inner layer channel V1 and an outer layer channel V2, the fire extinguishing member 400 may be provided in at least one channel, for example in the inner layer channel V1.

According to this configuration of the present disclosure, since the fire extinguishing member 400 is located outside the module case 200, the structure of the module case 200 itself for accommodating the cell assembly 100 or its internal configuration, such as the cell assembly 100, need not be changed seriously, when compared with the conventional configuration. Therefore, in order to configure the battery module according to the embodiment, it is not necessary to change the design of the module case 200 or its internal configuration. Therefore, in this case, since the present disclosure may be implemented such that the venting unit 300 is attached to the outer side of a conventional battery module, compatibility of the present disclosure may be improved. In addition, according to this embodiment, even if water is generated by the fire extinguishing member 400, it is possible to prevent the generated water from coming into direct contact with the cell assembly 100. Accordingly, problems caused by contact with water, for example accidents such as explosions, short circuit, and electric shock, may be prevented.

In addition, the fire extinguishing member 400 may be configured to be positioned on the upper surface of the venting channel V. For example, the fire extinguishing member 400 may be located on the upper surface of the inner layer channel V1, as shown in FIG. 5. In particular, a barrier W may exist between the inner layer channel V1 and the outer layer channel V2, and the fire extinguishing member 400 may be attached to the lower surface of the barrier W. Moreover, the fire extinguishing member 400 may be configured in a plate shape.

According to this configuration of the present disclosure, when heat is applied to the fire extinguishing member 400 located on the upper portion of the venting channel V to generate carbon dioxide and/or water, the generated carbon dioxide or the like may fall toward the venting channel V. In particular, carbon dioxide moves downward toward the inner space of the venting channel V to fill the inner space of the venting channel V, thereby effectively preventing oxygen from being introduced into the venting channel V or the high-temperature active material or spark from passing through the venting channel V and being discharged to the outside. In addition, water may lower the temperature of the venting gas and the inner space of the venting channel V and lower the temperature of the flame or spark. Moreover, when water exists in the form of water vapor due to a high temperature, the water may fill the inner space of the venting channel V, thereby blocking the inflow of oxygen. Therefore, according to this embodiment of the present disclosure, it is possible to effectively prevent the occurrence or spread of fire.

Moreover, the fire extinguishing member 400 may be located on the upper surface of the inlet 301, as indicated by A2 in FIG. 5. In this case, since the fire extinguishing member 400 comes into direct contact with the venting gas introduced into the inlet 301, heat may be rapidly applied from the high-temperature venting gas. Therefore, in this case, the pyrolysis reaction of the fire extinguishing member 400 may occur more rapidly. In addition, according to this embodiment, a portion where the high-temperature venting gas firstly contacts inside the venting unit 300 may be protected, thereby preventing the corresponding portion from being melted or damaged.

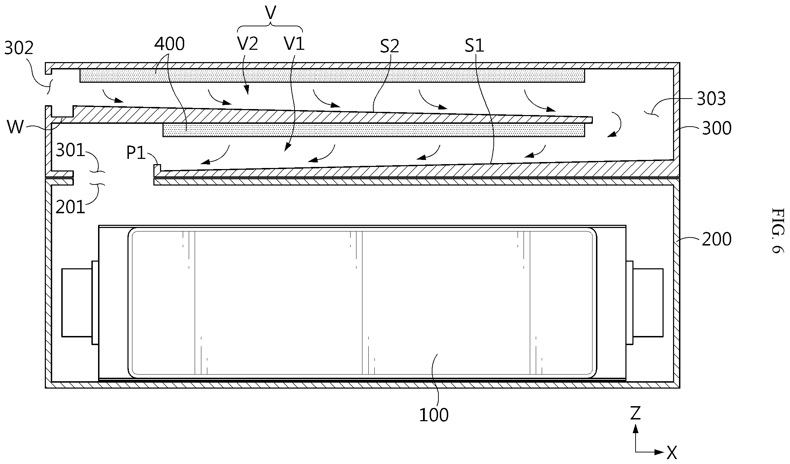

FIG. 6 is a cross-sectional view schematically showing the configuration of a battery module according to still another embodiment of the present disclosure. In particular, FIG. 6 may be regarded as another modification to the embodiment of FIG. 4. Also for this embodiment, features different from the former embodiments will be described in detail.

Referring to FIG. 6, the venting unit 300 is seated on the upper surface of the module case 200 and may include an inner layer channel V1 and an outer layer channel V2. In addition, the fire extinguishing member 400 may be provided in a plate shape and attached to the upper surface of each of the inner layer channel V1 and the outer layer channel V2 of the venting unit 300.

Here, the venting unit 300 may be configured to have an inclined surface formed on the venting channel V. That is, referring to FIG. 6, the venting unit 300 may be configured to include an inclined configuration in each of the inner layer channel V1 and the outer layer channel V2 (S 1, S2).

In particular, the venting unit 300 may have an inclined surface formed such that the height of at least a part of the venting channel V gradually decreases from the outlet 302 toward the inlet 301. Moreover, this inclined surface of the venting unit 300 may be formed on the surface of the venting channel V located at the lower portion of the fire extinguishing member 400. For example, the fire extinguishing member 400 may be attached to the upper surface of the outer layer channel V2, and at a position facing the lower surface of the fire extinguishing member 400, the inclined surface S2 may be formed such that the height of the lower surface of the outer layer channel V2 gradually decreases toward the inlet 301 (+x-axis direction in FIG. 6). In addition, the fire extinguishing member 400 may be attached to the upper surface of the inner layer channel V1, and at a position facing the lower surface of the fire extinguishing member 400, the inclined surface S 1 may be formed such that the height of the lower surface of the inner layer channel V1 gradually decreases toward the inlet 301 (-x-axis direction in FIG. 6).

According to this configuration of the present disclosure, carbon dioxide or the like generated by the fire extinguishing member 400 inside the venting unit 300 may be moved toward the inlet 301. That is, the carbon dioxide or the like generated by the fire extinguishing member 400 may flow toward the inlet 301 along the inclined surfaces S1, S2 while moving from the top to the bottom of each channel, as indicated by the arrow in FIG. 6. In addition, the carbon dioxide or the like moved to the inlet 301 of the venting unit 300 as above may be introduced into the inner space of the module case 200. Therefore, according to this embodiment, since carbon dioxide may be introduced into the inner space of the module case 200, the effect of preventing or suppressing fire in the inner space of the module case 200 may be achieved more easily. Moreover, in order to more reliably achieve this effect, it is preferable that an inclined surface is formed in at least a channel of a layer in which the inlet 301 is formed among the plurality of venting channels V, namely the inner layer channel V1.

Moreover, according to this embodiment, by the inclined surface of the venting channel V, it is possible to allow the venting gas to be directed toward the fire extinguishing member 400 located on the upper surface of the venting channel V. Therefore, by allowing heat to be reliably supplied to the fire extinguishing member 400, the pyrolysis reaction of the fire extinguishing member 400 may occur more rapidly.

Also, the venting unit 300 may include a blocking protrusion, as indicated by P1 in FIG. 6. The blocking protrusion P1 is located on the lower surface of the venting channel V and may be configured to protrude upward. In particular, the blocking protrusion P1 may be formed around the inlet 301.

The blocking protrusion P1 may be configured to prevent the water generated by the fire extinguishing member 400 from flowing into the module case 200 through the inlet 301. In particular, when the water vapor generated by the fire extinguishing member 400 is liquefied into water, the blocking protrusion P1 may prevent the water from flowing into the module case 200. Therefore, according to this embodiment, it is possible to prevent the occurrence of additional problems caused by water flowing into the module case 200, such as explosion, short circuit, current leakage, and the like.

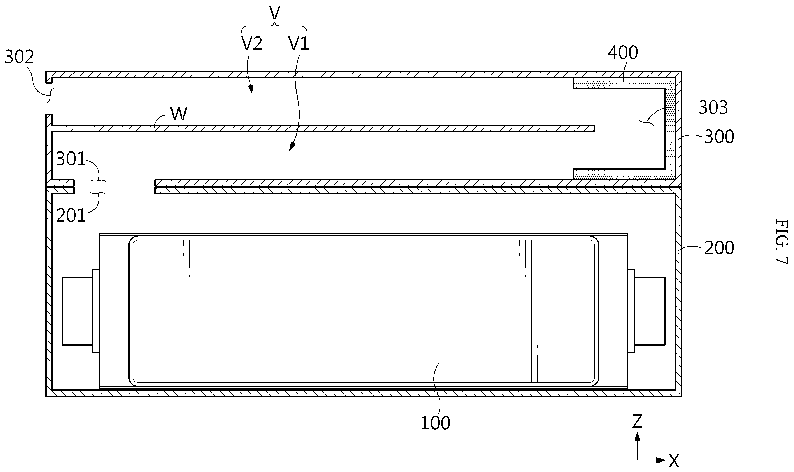

FIG. 7 is a cross-sectional view schematically showing the configuration of a battery module according to still another embodiment of the present disclosure. In particular, FIG. 7 may be regarded as still another modification to the embodiment of FIG. 4. Also for this embodiment, features different from the former embodiments will be described in detail.

Referring to FIG. 7, the fire extinguishing member 400 may be provided in a portion of the inner space of the venting unit 300 in which the connection hole 303 is formed. That is, when the venting unit 300 includes the plurality of venting channels V, the fire extinguishing member 400 may be provided in a portion that connects the plurality of venting channels V. More specifically, when the venting channel V includes an inner layer channel V1 and an outer layer channel V2 and a connection hole 303 for connecting the inner layer channel V1 and the outer layer channel V2 is formed, the fire extinguishing member 400 may be attached to the inner surface of the portion where the connection hole 303 between the inner layer channel V1 and outer layer channel V2 is located. For example, in the configuration of FIG. 7, the connection hole 303 is located at the right end of the inner layer channel V1 and the outer layer channel V2, and at this time, the fire extinguishing member 400 may be located at the right end of the inner layer channel V1 and the outer layer channel V2 where the connection hole 303 is located. In particular, as shown in FIG. 7, the fire extinguishing member 400 may be configured to surround the upper part, the lower part, and the side part of the connection hole 303. That is, the fire extinguishing member 400 may be configured to be attached to the upper surface, the side surface and the lower surface of the venting channel V in the portion of the connection hole 303 to cover the same.

According to this configuration of the present disclosure, the fire suppression performance by the fire extinguishing member 400 may be further improved. In particular, the portion where the connection hole 303 is located is a point at which the direction of the venting gas is changed, and may be a region where the venting gas stays or accumulates for a certain time. Therefore, heat may be accumulated in the portion of the connection hole 303, and according to this embodiment, the heat may be removed more quickly by the fire extinguishing member 400 located at the corresponding point. In addition, the portion where the connection hole 303 is located may be a part that directly collides with high-temperature venting gas or spark, and if heat accumulates, the venting unit 300 may be damaged. According to this embodiment, since the fire extinguishing member 400 is located at this point, it is possible to effectively prevent the high-temperature venting gas or high-temperature spark from damaging the case of the venting unit 300. Moreover, the case of the venting unit 300 may be made of a material such as plastic to ensure ease of molding, insulation, and lightness. At this time, if heat is concentrated on the portion of the connection hole 303 of the venting unit 300, there is a possibility that the corresponding portion is partially melted or damaged, but according to this embodiment, the fire extinguishing member 400 may preventing the corresponding portion from being melted or damaged by covering the portion.

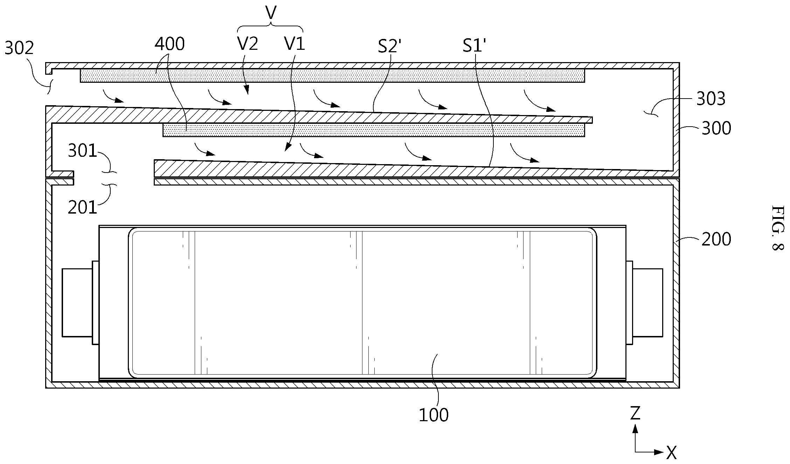

FIG. 8 is a cross-sectional view schematically showing the configuration of a battery module according to still another embodiment of the present disclosure. In particular, FIG. 8 may be regarded as still another modification to the embodiment of FIG. 4. Also for this embodiment, features different from the former embodiments will be described in detail.

Referring to FIG. 8, the venting unit 300 may be configured such that the fire extinguishing member 400 is provided on the upper surface of the venting channel V, and the lower surface of the venting channel V has an inclined shape. In particular, in the embodiment of FIG. 8, the lower surface of the venting channel V may be configured to be inclined such that its height is lowered toward the connection hole 303. For example, referring to FIG. 8, inclined surfaces S1', S2' may be formed on the bottom surface of the inner layer channel V1 and the bottom surface of the outer layer channel V2, respectively. At this time, both inclined surfaces S1', S2' may be configured such that their heights decrease in the direction (+x-axis direction in the drawing) toward the connection hole 303. In this case, it may be regarded that the inclined surface of the inner layer channel V1 is formed so that its height is lowered in the direction toward the outlet 302, and the inclined surface of the outer layer channel V2 is formed so that its height is lowered in the direction toward the inlet 301. In addition, the fire extinguishing member 400 may be provided on the upper portion of each inclined surface, namely the upper surface of each venting channel V.

According to this configuration of the present disclosure, when carbon dioxide and/or water is generated from the fire extinguishing member 400, the generated carbon dioxide or water may move toward the connection hole 303. That is, according to the embodiment of FIG. 8, the carbon dioxide or water generated on the upper surface of the inner layer channel V1 and the carbon dioxide or water generated on the upper surface of the outer layer channel V2 may be moved to the right in the direction toward the connection hole 303, as indicated by the arrow. At this time, venting gas, spark, heat, etc. may stay or accumulate in the connection hole 303, but according to this embodiment, the carbon dioxide or water moving toward the connection hole 303 may lower the temperature of the venting gas or reduce the spark or heat. Therefore, in this case, the occurrence or spread of fire may be suppressed, and the venting unit 300 may be protected. Also, in this case, it is possible to block the movement of water toward the connection hole 303 and into the module case 200.

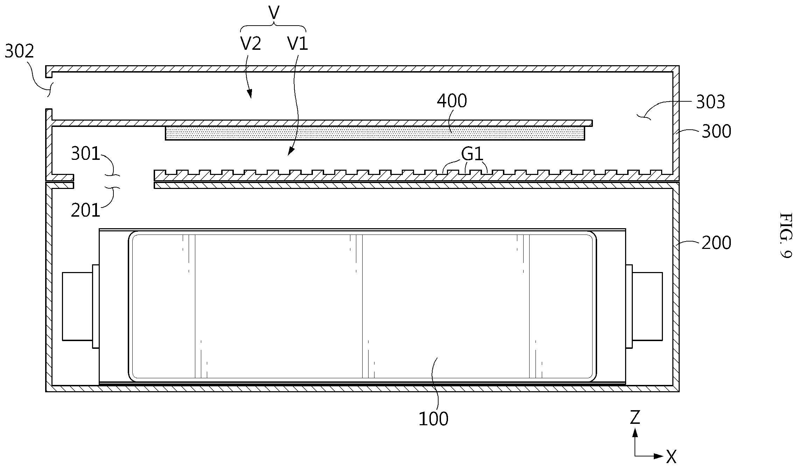

FIG. 9 is a cross-sectional view schematically showing the configuration of a battery module according to still another embodiment of the present disclosure. In particular, FIG. 9 may be regarded as still another modification to the embodiment of FIG. 4. Also for this embodiment, features different from the former embodiments will be described in detail.

Referring to FIG. 9, the venting unit 300 may be configured to have a downwardly concave groove formed on the bottom surface of the venting channel V, as indicated by G1. More specifically, in the embodiment of FIG. 9, the venting unit 300 may be configured to have a groove G1 formed on the lower surface of the inner layer channel V1 in a state where the fire extinguishing member 400 is positioned on the upper surface of the inner layer channel V1.

According to this embodiment of the present disclosure, since the water supplied by the fire extinguishing member 400 is retained in the groove G1, it is possible to prevent the water from flowing into the module case 200. In addition, according to this embodiment, since the friction force between the venting gas and the venting unit 300 is increased by the groove G1 formed on the inner surface of the venting channel V, the effect of blocking the movement of sparks or particles may be obtained.

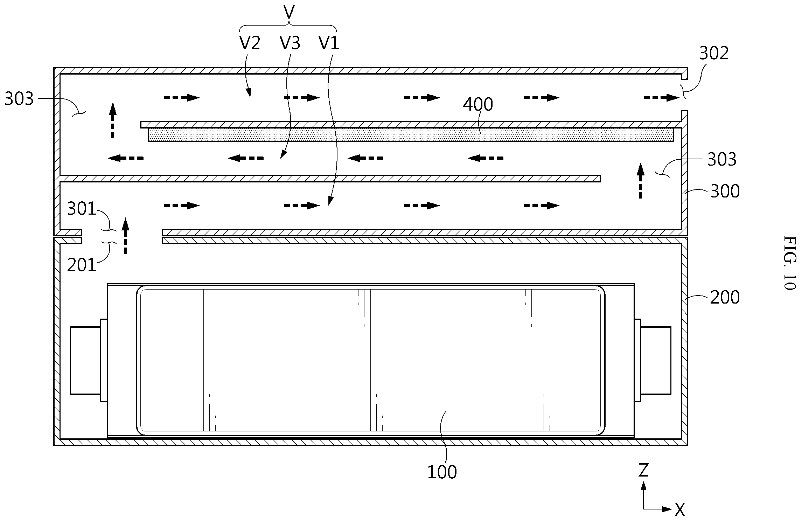

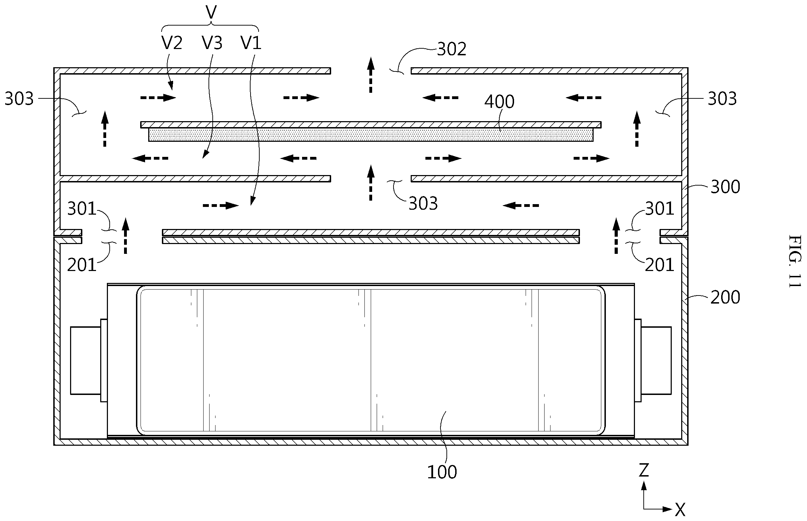

FIGS. 10 and 11 are cross-sectional views schematically showing the configuration of battery modules according to still other embodiments of the present disclosure. Also for these embodiments, features different from the former embodiments will be described in detail.

Referring to FIGS. 10 and 11, the venting unit 300 may be configured to have a venting channel V in three or more layers. For example, as shown in the drawing, the venting unit 300 may have an inner layer channel V1 located at the bottom, an outer layer channel V2 located at the top, and a center channel V3 located between the inner layer channel V1 and the outer layer channel V2. In this case, the venting unit 300 may have a plurality of connection holes 303 formed therein. That is, the connection hole 303 may be formed as a passage between the inner layer channel V1 and the center channel V3 and between the center channel V3 and the outer layer channel V2 to connect the channels. In this configuration, when the venting gas is ejected from the cell assembly 100, the venting gas may move as indicated by an arrow inside the venting unit 300.

Here, adjacent venting channels V may be configured such that venting directions are opposite to each other. For example, seeing the configuration of FIG. 10, the venting direction of the inner layer channel V1 may be a right direction, and the venting direction of the center channel V3 may be a left direction. In addition, the venting direction of the outer layer channel V2 may be formed in the right direction again. To this end, the inlet 301 of the venting unit 300 may be formed at the left end, and the outlet 302 of the venting unit 300 may be formed at the right end.

Alternatively, the venting unit 300 may have a plurality of inlets 301 and/or outlets 302. For example, as shown in FIG. 11, the inlets 301 of the venting unit 300 may be formed at the left end and the right end of the venting unit 300, respectively, to correspond to the position of the venting hole 201 of the module case 200. In this case, the connection hole 303 between the inner layer channel V1 and the center channel V3 may be formed at the center portion, and the connection hole 303 between the center channel V3 and the outer layer channel V2 may be formed at the left end and the right end, respectively. In addition, the outlet 302 of the venting unit 300 formed in the outer layer channel V2 may be formed in a central portion in left and right direction (x-axis direction).

As in the embodiments, when the venting unit 300 includes a venting channel V in a plurality of layers, the path of the venting channel V is formed longer, thereby lowering the temperature of the venting gas and more reliably preventing external leakage of sparks or the like. In addition, in this embodiment, by forming the venting channel V of several layers in different shapes, the venting control effect may be further increased. For example, as shown in FIGS. 10 and 11, by locating the fire extinguishing member 400 only in the center channel V3, the fire extinguishing member 400 may be more stably disposed inside the venting unit 300, and the effect of protecting the venting unit 300 by the fire extinguishing member 400 may be further increased. In addition, according to this embodiment, by forming various configurations in the channel of another layer where the fire extinguishing member 400 is not located, for example the inner layer channel V1 or the outer layer channel V2, the effect of preventing the occurrence or spread of fire may be stably achieved while securing the gas venting performance at a certain level or more,. For example, in this embodiment, on the lower surface of the inner layer channel V1, the inclined surface as shown in FIG. 6 or 8 or the groove as shown in FIG. 9 may be formed.

Meanwhile, in the various embodiments, it is illustrated that the venting hole 201 is formed on the upper surface of the module case 200 and the venting unit 300 is attached to the upper portion of the module case 200, but the present disclosure is not necessarily limited thereto. For example, the venting hole 201 may be formed on the side surface or the lower surface of the module case 200, and the venting unit 300 may be attached to the surface on which the venting hole 201 is formed, namely the side surface or the lower surface of the module case 200.

In addition, the venting unit 300 may be coupled to the module case 200 in various forms. For example, the venting unit 300 may be bonded to the upper surface of the module case 200 by an adhesive. Alternatively, the venting unit 300 may be fastened to the outer surface of the module case 200 by laser welding or the like.

A battery pack according to the present disclosure may include one or more battery modules according to the present disclosure described above. In addition, the battery pack according to the present disclosure may further include various other components other than the battery module, for example components of the battery pack known at the time of filing of this application, such as a BMS, a bus bar, a pack case, a relay, a current sensor, and the like.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include other various components included in a vehicle, in addition to the battery module or the battery pack. For example, the vehicle according to the present disclosure may further include a vehicle body, a motor, and a control device such as an electronic control unit (ECU), in addition to the battery module according to the present disclosure.

Meanwhile, in this specification, terms indicating directions such as "upper", "lower", "left", and "right" are used, but these terms are just for convenience of explanation, and it is obvious to those skilled in the art that these terms may vary depending on the location of an object or the position of an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

100: cell assembly
110: battery cell
200: module case
201: venting hole
300: venting unit
301: inlet, 302: outlet, 303: connection hole
400: fire extinguishing member
V: venting channel
V1: inner layer channel, V2: outer layer channel, V3: center channel
W: barrier
S1, S 1', S2, S2': inclined surface
P1: blocking protrusion
G1: groove

## Claims

1. A battery module, comprising:
a cell assembly having at least one battery cell;
a module case configured to accommodate the cell assembly in an inner space thereof and having a venting hole formed to discharge a venting gas generated from the cell assembly; and
a venting unit provided to an outer side of the module case and configured to have a venting channel formed in at least one layer so that the venting gas discharged from the venting hole is introduced into the venting channel and is movable in the inner space.

2. The battery module according to claim 1,
wherein the venting unit has an inlet formed in an inner surface thereof to communicate with the venting hole of the module case and has an outlet formed in a portion other than the inner surface.

3. The battery module according to claim 1,
wherein the venting unit is formed in a multilayer structure.

4. The battery module according to claim 1, further comprising:
a fire extinguishing member configured to generate carbon dioxide through a pyrolysis reaction.

5. The battery module according to claim 4,
wherein the fire extinguishing member is configured to generate water together with the carbon dioxide through the pyrolysis reaction.

6. The battery module according to claim 4,
wherein the fire extinguishing member is located inside the module case.

7. The battery module according to claim 4,
wherein the fire extinguishing member is located inside the venting unit.

8. The battery module according to claim 7,
wherein the fire extinguishing member is located on an upper surface of the venting channel.

9. The battery module according to claim 7,
wherein the venting unit has an inclined surface formed on the venting channel.

10. A battery pack, comprising the battery module according to any one of claims 1 to 9.

11. A vehicle, comprising the battery module according to any one of claims 1 to 9.
